# EUROPÄISCHE PATENTSCHRIFT

(11) **EP 1 522 472 B1**
(45) Veröffentlichungstag und Bekanntmachung des Hinweises auf die Patenterteilung: **11.06.2014**
(21) Anmeldenummer: 05100133.7
(22) Anmeldetag: 12.04.2002
(51) Int. Cl.: B60S 1/38

(54) **Wischerblatt**
Wiper blade
Balai d'essuie-glace

(30) Priorität: 23.05.2001 DE 10125045
(43) Veröffentlichungstag der Anmeldung: 13.04.2005
(62) Teilanmeldung aus: 02732391.4
(73) Patentinhaber: ROBERT BOSCH GMBH, 70442 Stuttgart (DE)
(72) Erfinder: Vogt, Andreas, 71272 Renningen (DE); Mueller, Lutz, 72631 Aichtal (DE); Hasenkox, Ulrich, 71254 Ditzingen (DE); Klamt, Guido, 70839 Gerlingen (DE); Dierkes, Wilma, 48599 Gronau (DE)

(56) Entgegenhaltungen:
- EP-A- 1 059 213
- WO-A-01/85482
- WO-A-02/081582
- DE-A1- 19 612 231
- US-A- 4 130 534
- US-A- 5 977 229
- PATENT ABSTRACTS OF JAPAN Bd. 1997, Nr. 09, 30. September 1997 (1997-09-30) & JP 09 136959 A (NISSAN MOTOR CO LTD), 27. Mai 1997 (1997-05-27)

## Beschreibung

### Stand der Technik

Die Erfindung geht von einem Wischerblatt für einen Scheibenwischer, insbesondere für einen Scheibenwischer eines Kraftfahrzeuges, gemäß der im Oberbegriff des Patentanspruches 1 näher definierten Art sowie einem Verfahren zur Herstellung eines Wischerblatts gemäß der im Oberbegriff des Patentanspruches 7 näher definierten Art aus.

Ein Wischerblatt der einleitend genannten Art ist aus der Praxis bekannt und umfaßt einen Wischgummi, der mit einer Wischgummilippe ausgebildet ist. Der Wischgummi bzw. die Wischgummilippe besteht aus einem Gummimaterial, das beispielsweise auf der Basis von Naturkautschuk hergestellt ist.

Wischgummis bzw. Wischgummilippen bekannter Wischerblätter haben den Nachteil, daß sie bei Betätigung auf einem Glas einer herkömmlichen Windschutzscheibe relativ hohe Trockenreibwerte µₜᵣ aufweisen.

Derartige Trockenreibwerte, die zwischen 0,8 und 1,2 liegen und höher als die bei nasser Windschutzscheibe auftretenden Reibwerte sind, machen leistungsstarke und damit kostenintensive Scheibenwischerantriebe erforderlich.

### Vorteile der Erfindung

Das erfindungsgemäße Wischerblatt für einen Scheibenwischer, insbesondere für einen Scheibenwischer eines Kraftfahrzeuges, mit den Merkmalen nach dem Oberbegriff des Patentanspruches 1, bei dem die Wischgummilippe teilweise aus Polyethylen gefertigt ist, hat demgegenüber den Vorteil, daß durch den Einsatz von Polyethylen als Werkstoff für die Wischgummilippe geringe Trockenreibwerte µₜᵣ erreicht werden können.

Dies führt bei bestimmten Betriebsbedingungen gegenüber dem Stand der Technik zu einer geringeren Geräuschentwicklung, und zwar auch bei trockener Windschutzscheibe.

Durch die gegenüber dem Stand der Technik geringen Trockenreibwerte des Wischerblatts nach der Erfindung können vorteilhafterweise kleiner dimensionierte Wischerantriebe mit entsprechend verminderter Leistung eingesetzt werden.

Die Wischgummilippe kann entweder mit Polyethylen beschichtet sein und/oder im Volumen Polyethylen enthalten.

Nach einer bevorzugten Ausführungsform handelt es sich bei dem Polyethylen um PE-UHMW. PE-UHMW, d.h. Polyethylen mit ultrahohem Molekulargewicht, eignet sich besonders zur Beschichtung von Wischgummilippen, da es schon als Vollmaterial einen niedrigen Trockenreibwert besitzt. So hat z.B. eine Vollmaterialprobe aus PE-UHMW bei einer Kontaktlänge von 8 mm und einer Last von 0,128 N an einer rotierenden Glaswelle, die sich mit 0,1 m/s bewegt, einen Trockenreibwert µₜᵣ von 0,21.

Bei einem Vulkanisieren eines Gummimaterials, das mit PE-UHMW beschichtet ist, verbindet sich das PE-UHMW durch Diffusion haftfest mit dem Gummimaterial. Sofern das PE-UHMW als Pulver auf das Gummimaterial aufgebracht ist, sintert es während der Vulkanisation. Insbesondere PE-UHMW haftet derart an einem Gummimaterial, daß der Polyethylen-Gummi-Materialverbund ab einer bestimmten Belastung im Verbund reißt.

Alternativ kann es sich bei dem Polyethylen des Wischerblatts nach der Erfindung um PE-HD, d.h. um Polyethylen hoher Dichte, oder auch um PE-X, d.h. um vernetztes Polyethylen, handeln. Insbesondere PE-X wird bei der Herstellung des Wischerblatts nach der Erfindung schmelzflüssig auf ein Gummimaterial aufgebracht und während dem Vulkanisieren thermisch nachvernetzt.

Die Erfindung hat auch ein Verfahren zur Herstellung eines Wischerblatts für einen Scheibenwischer, welcher einen Wischgummi mit einer Wischgummilippe umfaßt, zum Gegenstand. Bei diesem Verfahren wird die Wischgummilippe durch Vulkanisieren eines Gummimaterials zusammen mit Polyethylen hergestellt.

Das Gummimaterial kann auf Basis von Naturkautschuk hergestellt sein. Denkbar ist es aber auch, synthetische Gummimaterialien als Grundmaterial für die Wischgummilippe einzusetzen.

Bei einer bevorzugten Ausführungsform des Verfahrens nach der Erfindung erfolgt das Vulkanisieren unter den bei einer Vulkanisation eines Gummis üblichen Bedingungen.

Bevorzugt liegt das Polyethylen als Ausgangsstoff pulverförmig vor, und zwar mit einer Korngröße von etwa 0,1 µm bis 30 µm.

Bei einer vorteilhaften Ausführung des Verfahrens nach der Erfindung wird das Gummimaterial vor dem Vulkanisieren mit Polyethylen beschichtet. Das Vulkanisieren des mit Polyethylen beschichteten Formteils kann dann in einem Formwerkzeug erfolgen. Das vulkanisierte Werkstück aus dem Gummimaterial und dem Polyethylen ist leicht entformbar.

Die vor dem gemeinsamen Vulkanisieren erfolgende Beschichtung des Gummimaterials mit Polyethylen kann derart erfolgen, daß das in Form gebrachte Gummimaterial mit einer Polyethylen-Partikel enthaltenden Dispersion beschichtet wird, oder daß das Gummimaterial mit Polyethylen-Pulver bestäubt wird. Insbesondere zum Aufbringen eines PolyethylenPulvers eignet sich ein übliches elektrostatisches Pulverbeschichtungsverfahren. Vorteilhafterweise wird das unvulkanisierte Gummimaterial vollflächig mit PE-Pulver bestäubt. Eine teilweise Abdeckung ist aber möglich.

Das Polyethylen kann aber auch mittels eines Wirbelbetts auf das Gummimaterial aufgebracht werden. Bei einer vorteilhaften Ausführungsform wird das Gummimaterial hierbei heiß und klebrig aus einem Extruderkopf extrudiert. Das Gummimaterial gelangt dann durch eine Öffnung in ein niedrig konzentriertes Wirbelbett aus sehr feinem PE-UHMW-Pulver mit einer Korngröße zwischen 0,1 µm und 15 µm, verläßt dann das Wirbelbett durch eine Öffnung, um dann mit sauberer Spülluft angeblasen zu werden. Dadurch werden die nicht an dem Gummimaterial haftenden Polyethylen-Partikel entfernt. Die Spülluft kann wiederum auch zum Betrieb des Wirbelbetts genutzt werden.

Bei einer weiteren Ausführungsform des Verfahrens nach der Erfindung wird unvulkanisiertes Gummimaterial in einer Heißpresse mit Edelstahlwerkzeug beispielsweise bei einer Temperatur von 180°C und einem Druck von 70 bar für eine Zeitdauer von 10 Sekunden in Form gepreßt, dann entnommen und mit Wasser abgekühlt. Nach dem Trocknen wird das so gefertigte, teilvulkanisierte Gummiformteil mit PE-UHMW-Pulver beidseitig dünn bestäubt. Anschließend wird das bestäubte Formteil bei einem Druck von 70 bar, einer Temperatur von 180°C für eine Zeitdauer von 5 Minuten in einem mit dem Gummiformteil korrespondierenden Formwerkzeug vulkanisiert.

Das Gummimaterial und das Polyethylen können aber auch nach einem Coextrusionsverfahren miteinander verbunden werden. Bei der Coextrusion wird hierbei zumindest im Bereich der Wischgummilippe des Wischgummis eine Polyethylen-Schmelze, Polyethylen-Folie, Polyethylen-Monofile oder Polyethylen-Schnur zugeführt. Anschließend werden das Gummimaterial und das an diesem anliegende Polyethylen gemeinsam vulkanisiert.

Es ist aber auch möglich, den Wischergummi mit der Wischgummilippe nach einem Spritzgußverfahren herzustellen. Dabei wird eine Folie, ein Monofile oder eine Schnur aus Polyethylen vor dem Spritzgießen in eine Spritzgußform eingebracht, oder aber die Spritzgießform wird mit einer Dispersion oder einem Pulver aus Polyethylen beschichtet.

Wenn das Polyethylen im Volumen der Wischgummilippe enthalten sein soll, wird die Wischgummilippe zweckmäßigerweise aus einer Mischung hergestellt, die das Gummimaterial und das Polyethylen umfaßt.

Nach einer vorteilhaften Ausführungsform enthält die Mischung zwischen 1% und 50% Polyethylen-Pulver, insbesondere PE-UHMW-Pulver.

Weitere Vorteile und vorteilhafte Weiterbildungen des Gegenstandes nach der Erfindung ergeben sich aus der Beschreibung, der Zeichnung und den Patentansprüchen.

### Zeichnung

Vier Ausführungsbeispiele des Wischerblattes nach der Erfindung einer Scheibenwischervorrichtung eines Kraftfahrzeuges sind in der Zeichnung schematisch vereinfacht dargestellt und werden in der nachfolgenden Beschreibung näher erläutert. Es zeigen
Figur 1 eine Prinzipdarstellung eines Wischerblattes im Querschnitt;
Figur 2 eine Querschnittsdarstellung einer zweiten Ausführungsform eines Wischerblattes;
Figur 3 eine dritte Ausführungsform eines Wischerblattes im Querschnitt;
Figur 4 eine vierte Ausführungsform eines Wischerblattes.

### Beschreibung der Ausführungsbeispiele

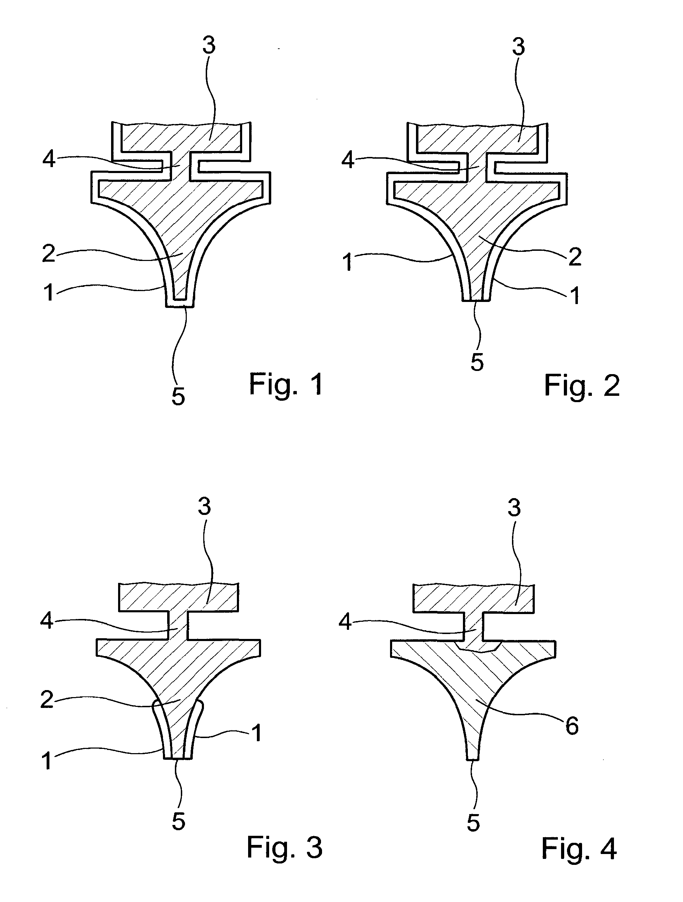

In Figur 1 ist ein Wischerblatt dargestellt, das aus einer eine Wischkante 5 aufweisenden Wischlippe 2 aus Gummimaterial, einem hier nur teilweise dargestellten Kopfteil 3 aus Gummimaterial und einem sogenannten Umlegesteg 4 aus Gummimaterial besteht, der zwischen dem Kopfteil 3 und der Wischlippe 2 angeordnet ist.

Die Wischlippe 2, das Kopfteil 3 und der Umlegesteg 4 sind mit einer Oberfläche versehen, die aus einer Polyethylenschicht 1 gebildet ist, die in Figur 1 der Anschaulichkeit halber im Vergleich zu der Wischlippe 2, dem Kopfteil 3 und dem Umlegesteg 4 vergrößert dargestellt ist. Die Polyethylenschicht 1 besteht vorliegend aus PE-UHMW, d. h. aus Polyethylen mit ultrahohem Molekulargewicht.

Das Wischerblatt nach Figur 1 ist derart hergestellt, daß zunächst teilweise vulkanisiertes Gummimaterial in einem Extruder mittels eines Werkzeuges in Wischerblattform gepreßt, dann mit PE-UHMW-Pulver bestäubt und anschließend vulkanisiert wird. Die Bedingungen bei der Vulkanisation entsprechend üblichen Vulkanisationsbedingungen.

Die Materialbeschaffenheit der Wischgummilippe ist im Ergebnis derart, daß bei einer Messung, bei der das Wischerblatt 1 an einer rotierenden Glasplatte anliegt und Wischgeschwindigkeiten sowie Andruckverhältnisse wie bei einem Kraftfahrzeug vorliegen, Trockenreibwerte µₜᵣ zwischen 0,32 und 0,48 erreicht werden können.

Das in Figur 2 dargestellte Ausführungsbeispiel eines Wischerblattes umfaßt im wesentlichen die gleichen Bestandteile wie das Wischerblatt nach Figur 1. Das Wischerblatt nach Figur 2 unterscheidet sich jedoch von demjenigen nach Figur 1 durch eine sogenannte Wischkante 5, welche frei von Polyethylen ist.

Das in Figur 3 dargestellte Ausführungsbeispiel einer Wischerblattes umfaßt ebenfalls im wesentlichen die gleichen Bestandteile wie das Ausführungsbeispiel nach Figur 1, unterscheidet sich jedoch von letzterem dadurch, daß die an der Wischlippe 2 ausgebildete Wischkante 5, der Umlegesteg 4 und das Kopfteil 3 frei von Polyethylen sind und die Wischlippe 2 nur in seinen an die Wischkante 5 angrenzenden, lateralen Bereichen, d. h. nur teilweise mit Polyethylen beschichtet ist.

Das in Figur 4 dargestellte Ausführungsbeispiel zeigt ein Wischerblatt, das im wesentlichen ein nur teilweise dargestelltes Kopfteil 3 aus Gummimaterial, eine sich an das Kopfteil 3 anschließenden Umlegesteg 4 aus Gummimaterial und eine Wischlippe 6 mit einer Wischkante 5 umfaßt. Die Wischlippe 6 besteht aus Gummimaterial, in welchen Polyethylen in Form von PE-UHMW eingebettet ist. Die Wischlippe 6 ist aus einem Ausgangsmaterial hergestellt, das etwa 40 % Polyethylen enthält.

Der Wischgummi ist vorliegend ein Extrusionsteil. Alternativ kann der Wischgummi auf bekannte Weise auch nach einem Extrusionsverfahren oder durch Compression molding hergestellt sein.

## Patentansprüche

1. Verfahren zur Herstellung eines Wischerblatts für einen Scheibenwischer, das ein Wischgummi mit einer Wischgummilippe umfasst, wobei die Wischgummilippe durch Vulkanisieren eines Gummimaterials zusammen mit Polyethylen hergestellt wird, und wobei das Polyethylen als Ausgangsstoff pulverförmig ist und eine Korngröße < 30 µm aufweist, **dadurch gekennzeichnet, dass** das Gummimaterial vor dem Vulkanisieren mit dem Polyethylen beschichtet wird, wobei das Polyethylen nach einem elektrostatischen Pulverbeschichtungsverfahren oder mittels eines Wirbeibetts auf das Gummimaterial aufgebracht wird.

2. Verfahren nach Anspruch 1, **dadurch gekennzeichnet, dass** das mit Polyethylen beschichtete Gummimaterial Spülluft ausgesetzt wird.

## Claims

1. Method for producing a wiper blade for a windscreen wiper, which comprises a wiping rubber with a wiping rubber lip, the wiping rubber lip being produced by vulcanizing a rubber material together with polyethylene, and the polyethylene starting out as a powdered material and having a grain size of < 30 µm, **characterized in that** the rubber material is coated with the polyethylene before the vulcanizing, the polyethylene being applied to the rubber material by an electrostatic powder coating process or by means of a fluidized bed.

2. Method according to Claim 1, **characterized in that** the rubber material coated with polyethylene is exposed to purging air.

## Revendications

1. Procédé de fabrication d'un balai d'essuie-glace pour un essuie-glace, qui comprend un caoutchouc d'essuie-glace avec une lèvre de caoutchouc d'essuie-glace, dans lequel on fabrique la lèvre de caoutchouc d'essuie-glace par vulcanisation d'un matériau de caoutchouc avec du polyéthylène, et dans lequel le polyéthylène comme matière première est sous forme de poudre et présente une taille de grain < 30 µm, **caractérisé en ce que** l'on recouvre le matériau de caoutchouc avec du polyéthylène avant la vulcanisation, le polyéthylène étant déposé par un procédé de dépôt électrostatique de poudre ou au moyen d'un lit fluidisé sur le matériau de caoutchouc.

2. Procédé selon la revendication 1, **caractérisé en ce que** l'on expose le matériau de caoutchouc recouvert de polyéthylène à de l'air de balayage.
